# EUROPÄISCHE PATENTSCHRIFT

(11) **EP 2 677 202 B1**
(45) Veröffentlichungstag und Bekanntmachung des Hinweises auf die Patenterteilung: **04.12.2019**
(21) Anmeldenummer: 13171032.9
(22) Anmeldetag: 07.06.2013
(51) Int. Cl.: F16H 25/24

(54) **Linearantrieb**
Linear drive
Entraînement linéaire

(30) Priorität: 22.06.2012 DE 202012102316 U
(43) Veröffentlichungstag der Anmeldung: 25.12.2013
(73) Patentinhaber: RK Rose + Krieger GmbH Verbindungs- und Positioniersysteme, 32423 Minden (DE)
(72) Erfinder: Scheibe, Jörg, 31655 Stadthagen (DE)
(74) Vertreter: Dantz, Jan Henning

(56) Entgegenhaltungen:
- EP-A1- 0 327 705
- EP-A2- 0 828 093
- EP-A2- 1 120 585
- WO-A1-02/35119

## Beschreibung

Die vorliegende Erfindung betrifft einen Linearantrieb nach dem Oberbegriff des Anspruches 1.

Die DE 38 04 117 offenbart eine mechanische Lineareinheit mit einer drehbaren Gewindespindel, mittels der eine drehfest angeordnete Spindelmutter linear verfahrbar ist. Die Gewindespindel ist durch mehrere ringförmige Abstützelemente abgestützt, die in vorbestimmten Abständen entlang eines Profils positioniert werden können. Die Abstützelemente weisen dabei eine ringförmige Durchführung auf, die zylindrisch mit Spiel um die Gewindespindel angeordnet ist. Dadurch ist es möglich, dass sich die Gewindespindel innerhalb der Durchführung senkrecht zu ihrer Längsrichtung bewegt, ohne dass eine Abstützung stattfindet. Dies kann zu Vibrationen und zu unangenehmer Geräuschentwicklung führen.

Die DE 100 02 849 offenbart eine Lineareinheit mit mehreren Stützeinheiten für eine Gewindespindel. Die Stützeinheiten weisen seitliche Ansätze auf, die in Längsnuten der Führungsschiene verschiebbar aufgenommen sind. Ferner ist eine an den Stützeinheiten eine starre Durchführung für die Gewindespindel ausgebildet.

Die WO 02/35119 offenbart einen Linearantrieb, bei der eine Spindel über ihre Länge über Stützelemente gehalten ist. An den Stützelementen können wahlweise der durch Feder vorgespannte Stege oder eine schwimmend gelagerte Hülse vorgesehen sein. Die Hülse oder die Stege sind dabei durch Schraubenfedern vorgespannt, die in einzelnen Aufnahmen des Stützelementes gehalten sind.

Es ist daher Aufgabe der vorliegenden Erfindung, einen Linearantrieb zu schaffen, bei dem die Gewindespindel stabil abgestützt ist.

Diese Aufgabe wird mit einem Linearantrieb mit den Merkmalen des Anspruches 1 gelöst.

Erfindungsgemäß umfasst das mindestens eine Stützelement eine Durchführung für die Gewindespindel, an der mindestens ein gegen die Gewindespindel vorgespanntes Führungselement vorgesehen ist. Dadurch ist die Gewindespindel nicht mehr mit Spiel an der Durchführung angeordnet, sondern wird durch das Führungselement kontaktiert, das eine gewisse Abstützung und Dämpfung bereitstellt. Dies wirkt sich einerseits positiv auf das Schwingungsverhalten der Gewindespindel aus und andererseits wird eine Geräuschentwicklung bei schwingender Gewindespindel vermindert.

Erfindungsgemäß ist das Führungselement im Wesentlichen hülsenförmig ausgebildet, so dass die Gewindespindel umgriffen ist. Dies ermöglicht eine leichtgängige Führung des Stützelementes bei einer Bewegung relativ zur Gewindespindel. Das Führungselement kann beispielsweise als geschlitzte Buchse ausgebildet sein, die radial nach innen gegen die Gewindespindel vorgespannt ist. Dadurch ergibt sich eine besonders gute Abstützung der Gewindespindel in radiale Richtung. Durch den Einsatz einer geschlitzten Buchse kann eine Abstützung mit wenigen Bauteilen erhalten werden.

Vorzugsweise ist das Führungselement radial nach innen durch ein Federelement vorgespannt. Das Federelement kann dabei mindestens einen O-Ring aufweisen, der beispielsweise an seiner Außenseite an einer Wand der Durchführung abgestützt ist. Es können auch mehrere O-Ringe an dem Führungselement vorgesehen sein, je nachdem, mit welcher radialen Vorspannung das Führungselement an der Gewindespindel anliegen soll. Zusätzlich oder statt eines O-Ringes kann auch eine elastische Masse am äußeren Umfang der Buchse vorgesehen werden, die die Dämpfungseigenschaften weiter optimiert.

Für eine besonders stabile Abstützung weist das mindestens eine Stützelement einen Klemmmechanismus auf, mittels dem das Stützelement kraftschlüssig festlegbar ist. Der Klemmmechanismus kann ein bewegbares Klemmelement umfassen, das durch eine Feder in eine klemmende Position vorgespannt ist. Der Klemmmechanismus kann dabei auf einfache Weise entriegelt werden, um das Stützelement in Längsrichtung der Gewindespindel zu verfahren, um dann gegebenenfalls erneut wieder festzuklemmen.

Gemäß einer weiteren Ausgestaltung der Erfindung ist die Gewindespindel in einem Profil angeordnet, an dem eine Stahlschiene festgelegt ist. Vorzugsweise wird das Stützelement an der Stahlschiene geführt und in einer vorbestimmten Zwischenposition festgeklemmt, so dass eine besonders stabile Abstützung der Gewindespindel erhalten werden kann. Die Anzahl der Stützelemente auf jeder Seite der Spindelmutter ist dabei abhängig von der Länge der Gewindespindel.

Zur Positionierung des mindestens einen Stützelementes kann dieses einen Anschlag aufweisen, der mit einem an einem Profil vorgesehenen Stopper zusammenwirkt, um das Stützelement in einer vorbestimmten Position in Längsrichtung der Gewindespindel an dem Profil oder der Schiene zu fixieren.

Gemäß einer weiteren Ausgestaltung ist das Führungselement in Längsrichtung durch ein Halteelement gesichert und an dem Stützelement fixiert. Das Halteelement kann beispielsweise als Platte ausgebildet sein, die einen radial hervorstehenden Vorsprung des Führungselementes festlegt. Durch unterschiedliche Platten können verschiedene Anschlagspositionen definiert werden.

Die Erfindung wird nachfolgend anhand eines Ausführungsbeispiels mit Bezug auf die beigefügten Zeichnungen näher erläutert. Es zeigen:
- Figur 1: eine perspektivische Ansicht eines erfindungsgemäßen Linearantriebes mit mehreren Detailansichten;
- Figur 2: eine teilweise geschnittene Seitenansicht des Linearantriebes der Figur 1;
- Figuren 2A bis 2F: mehrere Schnittansichten an unterschiedlichen Positionen des Linearantriebes der Figur 2;
- Figur 3: eine perspektivische Explosionsdarstellung eines Stützelementes des Linearantriebes der Figur 1;
- Figuren 4A bis 4D: mehrere Ansichten des zusammengebauten Stützelementes der Figur 3; und
- Figur 5: eine Ansicht verschiedener Platten für die Stützelemente des Linearantriebes.

Ein Linearantrieb 1 umfasst eine drehbar angetriebene Gewindespindel 2, die innerhalb eines im Querschnitt im Wesentlichen U-förmigen Profils 3 angeordnet ist. An der Gewindespindel 2 ist ein Schlitten 4 verfahrbar gelagert, der an einer drehfesten Spindelmutter 5 gehalten ist. Die Gewindespindel 2 kann für einen Kugelgewindetrieb eingesetzt werden oder ein anderes Gewinde aufweisen, beispielsweise ein Trapezgewinde.

An dem Profil 3 ist eine Schiene 6 festgelegt, die zur Führung der Spindelmutter 5 dient. Das Profil 3 ist endseitig mit einem ersten Lager 7 und an der gegenüberliegenden Seite über ein zweites Lager 9 für die Gewindespindel 2 verschlossen. An dem ersten Lager 7 steht ein Zapfen 8 der Gewindespindel 2 hervor, der mit einem nicht dargestellten Antrieb gekoppelt sein kann, um die Gewindespindel 2 anzutreiben.

Der Linearantrieb 1 kann in einer größeren Länge von beispielsweise 2 m bis 10 m hergestellt werden, wobei je nach Länge eine Abstützung der Gewindespindel 2 vorgenommen wird. Hierfür sind um die Gewindespindel 2 mehrere Stützelemente 10, 11, 12, 13 und 14 vorgesehen, die jeweils an der Schiene 6 geführt sind. Die Stützelemente 10, 11, 12, 13, 14 sind jeweils an vorbestimmten Zwischenpositionen an dem Profil 3 positioniert, um in gewissen Abständen die Gewindespindel 2 gegen eine Bewegung senkrecht zur Längsrichtung abzustützen. Auf der zu dem Schlitten 4 gegenüberliegenden Seite sind weitere Stützelemente 10', 11', 12', 13' und 14' vorgesehen, die an dem Schlitten 4 gehalten sind und zwischen dem Ende des Profils 3 benachbart zu dem Lager 9 und dem Schlitten 4 angeordnet sind.

Die Schiene 6 besitzt eine höhere Festigkeit als das Profil 3, das als extrudiertes Aluminiumprofil hergestellt sein kann. Die Schiene 6 kann als Stahlprofil ausgebildet sein, das einen im Wesentlichen rechteckigen Querschnitt mit einem verbreiterten Kopfabschnitt 36, einem schmaleren Mittelabschnitt 37 und einem verbreiterten Fußabschnitt 38 aufweist. Der Fußabschnitt 38 ist an dem Profil 3 festgelegt. Das Profil 3 ist im Querschnitt im Wesentlichen U-förmig ausgebildet und weist zwei Schenkel 30 auf, innerhalb derer die Gewindespindel 2 angeordnet ist. Die Schenkel 30 sind über einen bodenseitigen Abschnitt 31 miteinander verbunden, an dem die Schiene 6 fixiert ist. Durch die Ausbildung eines verdickten Kopfabschnittes 36 können die Spindelmutter 5 sowie die Stützelemente 10 bis 14 der Kopfabschnitt 36 U-förmig umgreifen, so dass ein Abheben der Stützelemente 10 bis 14 sowie der Spindelmutter 5 verhindert wird und eine Führung bereitgestellt wird, die lediglich eine Bewegung in Längsrichtung der Schiene 6 zulässt.

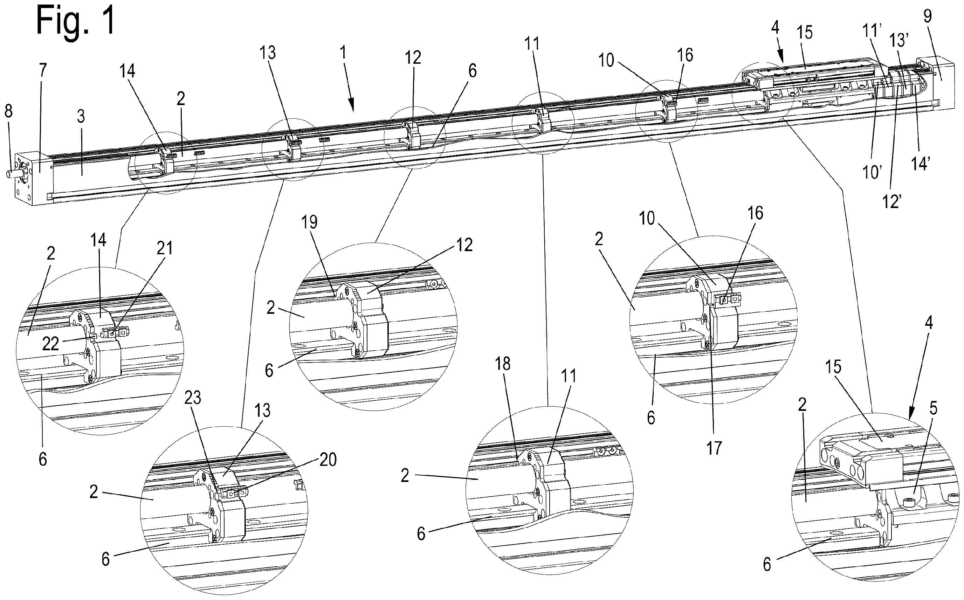

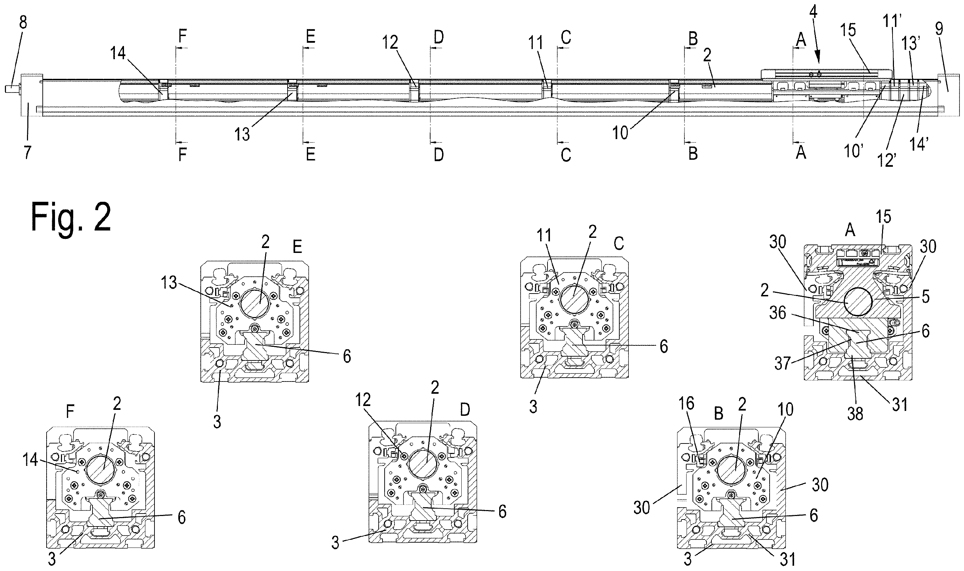

Um die Stützelemente 10, 11, 12, 13, 14 an vorbestimmten Positionen des Profils 3 zu positionieren, weisen diese Anschläge auf. So weist das Stützelement 10 einen Anschlag 17 auf, der mit einem Stopper 16 zusammenwirkt, der an einem Schenkel 30 des Profils 3 montiert ist. Auf ähnliche Weise weist das Stützelement 11 einen Anschlag 18 und das Stützelement 12 einen Anschlag 19 auf, die an unterschiedlichen Positionen angeordnet sind, damit jedes Stützelement 10, 11, 12, 13, 14 mit einem vorbestimmten Stopper an dem Profil 3 zusammenwirkt. Das Stützelement 13 weist einen Anschlag 23 auf, der mit einem Stopper 20 zusammenwirkt, der an dem Profil 3 festgelegt ist. In Querschnittsansicht benachbart hierzu ist ein Anschlag 22 an dem Stützelement 14 vorgesehen, der mit einem Stopper 21 zusammenwirkt. Verfährt der Schlitten 4 mit der Spindelmutter 5 nun von einer in den Figuren 1 und 2 gezeigten Position auf der linken Seite nach rechts, gelangt zunächst der Anschlag 22 in Kontakt mit dem Stopper 21, so dass das Stützelement 14 an dieser Position angehalten wird und die Spindelmutter 5 mit den weiteren Stützelementen 10 bis 13 weiter nach rechts verfahren werden kann. Nachfolgend werden dann die Stützelemente 13, 12, 11 und 10 an den vorbestimmten Positionen angehalten, bis die in den Figuren 1 und 2 gezeigte Endposition erreicht ist. In dieser Position wird die Gewindespindel 2 durch die Stützelemente 10 bis 14 in eine Richtung senkrecht zur Längsrichtung abgestützt.

Wird die Gewindespindel 2 nun in eine gegenläufige Richtung angetrieben, bewegt sich die Spindelmutter 5 mit dem Schlitten 4 nach links. Dann werden die Stützelemente 10 bis 14 an der Spindelmutter 5 bzw. dem Schlitten 4 eingesammelt, während die Stützelemente 10', 11', 12', 13' und 14' an vorbestimmten Stoppern an dem Profil 3 angehalten werden, um dann die Gewindespindel 2 abzustützen.

Die Stützelemente 10 bis 14 einerseits und 10' bis 14' andererseits sind aneinander über Magnetkräfte gehalten, wobei die Haltekräfte der Magneten von der Spindelmutter 5 hin abnehmen. Die äußeren Stützelemente 14 und 14' sind somit leichter von den benachbarten Stützelementen 13 bzw. 13' zu lösen, als die Stützelemente 13 und 13' von den weiter innen liegenden Stützelemente 12 und 12'. Auf diese Weise wird verhindert, dass an einem Stopper versehentlich mehrere Stützelemente 10 bis 14 und 10' bis 14' angehalten werden.

An der Spindelmutter 5 ist ein Schlitten 4 festgelegt, der eine Plattform 15 aufweist, an der beliebige Bauteile fixiert werden können, die über den Linearantrieb 1 verfahren werden sollen.

Wie in den Figuren 2A bis 2F gezeigt ist, umgreifen sowohl die Spindelmutter 5 als auch die Stützelemente 10 bis 14 den oberen Kopfabschnitt 36 der Schiene 6 U-förmig. Die Schiene 6 besitzt dabei einen ähnlich großen Querschnitt wie die Gewindespindel 2, so dass eine stabile Abstützung der Stützelemente 10 bis 14 an der Schiene 6 gewährleistet ist. Die Schiene 6 kann über Schraubverbindungen oder andere Befestigungsmittel an dem bodenseitigen Abschnitt 31 des Profils 3 festgelegt sein.

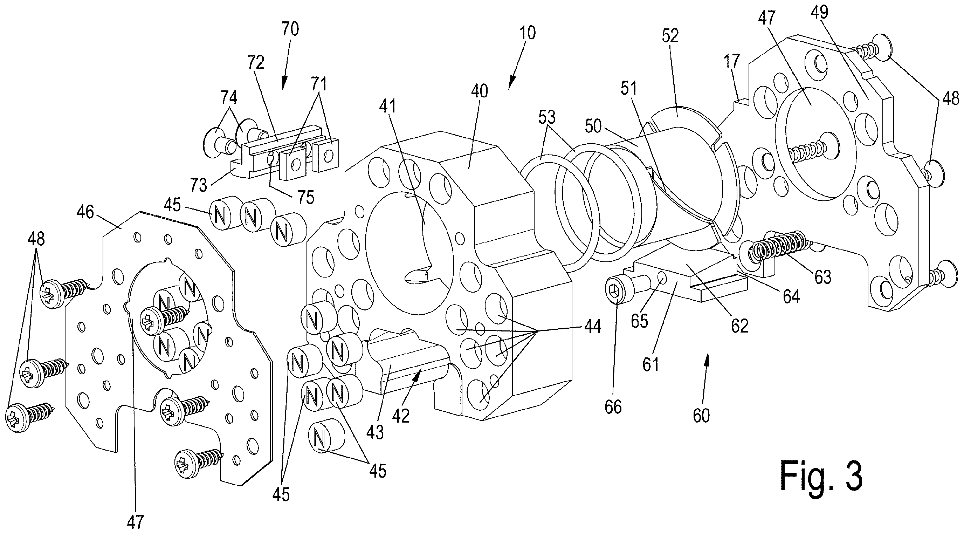

In Figur 3 ist ein Stützelement 10 im Detail gezeigt, wobei die anderen Stützelemente 11 bis 14 und 10' bis 14' ähnlich aufgebaut sind, lediglich die Position des jeweiligen Anschlages 17 variiert. Zudem ist die Anzahl der Magnete 45 an den Stützelementen 11 bis 14 bzw. 10' bis 14' unterschiedlich.

Das Stützelement 10 umfasst einen mittleren Stützkörper 40, in dem eine kreisförmige Durchführung für die Gewindespindel 2 ausgespart ist. Der Stützkörper 40 umfasst eine U-förmige Aufnahme 42, die auf den verbreiterten Kopfabschnitt 36 der Schiene 6 aufschiebbar ist. An der U-förmigen Aufnahme 42 sind nach innen gerichtete Stege mit Führungsflächen 43 ausgebildet, die den verbreiterten Kopfabschnitt 36 hintergreifen.

In dem Stützkörper 40 ist ferner eine Vielzahl von Aussparungen 44 ausgebildet, die zur Aufnahme jeweils eines Magneten 45 dienen. Die Anzahl der Magnete 45, die in die Aussparungen 44 eingefügt werden, bestimmt die Haltekräfte zwischen dem Stützelement 10 und einem benachbarten Stützelement 11. Die Stützelemente, die näher an der Spindelmutter 5 angeordnet sind, weisen mehr Magnete 45 auf als weiter außen liegende Stützelemente, so dass die Haltekräfte zwischen zwei Stützelementen von der Spindelmutter weg abnehmen. Die Aussparungen 44 des Stützkörpers 40 sind durch eine Platte 46 verschlossen, die für die Magnetkräfte durchlässig ist, beispielsweise aus Aluminium besteht, und ein Herausfallen der Magnete 45 verhindert. Die Platte 46 weist ebenfalls eine Durchführungen 47 für die Gewindespindel 2 auf, wobei die Platte 46 über mehrere Schrauben 48 an dem Stützkörper 40 fixiert ist.

Auf der zu der Platte 46 gegenüberliegenden Seite ist eine weitere Platte 49 vorgesehen, die über Schrauben 48 an dem Stützkörper 40 festgelegt ist. Die Platte 49 besteht aus Metall und kann an Magneten eines benachbarten Stützelementes oder der Spindelmutter 5 durch Magnetkräfte fixiert werden.

An dem mittleren Stützkörper 40 ist in der Durchführung 41 eine Buchse 50 eingesetzt, die geschlitzt ausgebildet ist und mit einer Vorspannung gegen die äußeren Umfang der Gewindespindel 2 gedrückt wird. Hierfür sind um die Buchse 50 elastische O-Ringe 53 vorgesehen, die am äußeren Umfang an der Durchführung 41 des Stützkörpers 40 anliegen und an der Innenseite die Buchse 50 elastisch gegen die Gewindespindel 2 vorspannen. Die Buchse 50 weist einen radial hervorstehenden Kragen 52 auf, der zwischen der Platte 49 und einer Stirnseite des Stützkörpers 40 angeordnet ist, so dass die Buchse 50 in axiale Richtung nicht verrutschen kann. Benachbart zu den O-Ringen 53 kann ein elastisches Dichtmittel eingespritzt sein, um die Dämpfung noch weiter zu verbessern, was zu geringeren Vibrationen an der Gewindespindel 2 und zu weniger Geräuschentwicklung führt.

Zur Festlegung des Stützelementes 10 an der Schiene 6 ist ein Klemmmechanismus 60 vorgesehen, der ein Klemmelement 61 aufweist, das eine zur Längsrichtung der Schiene 6 geneigte Anlaufschräge 62 umfasst. Das Klemmelement 61 ist durch eine Feder 63 in Längsrichtung vorgespannt. Die Feder 63 ist dabei zwischen der Platte 49 und einer Stirnseite 64 an dem Mitnehmerelement 61 abgestützt. Auf der zur Feder 63 gegenüberliegenden Seite ist eine Schraube 66 in eine Gewindebohrung 65 an dem Klemmelement 61 eingedreht, die über die Platte 46 hervorsteht, wobei die Überstand einstellbar ist.

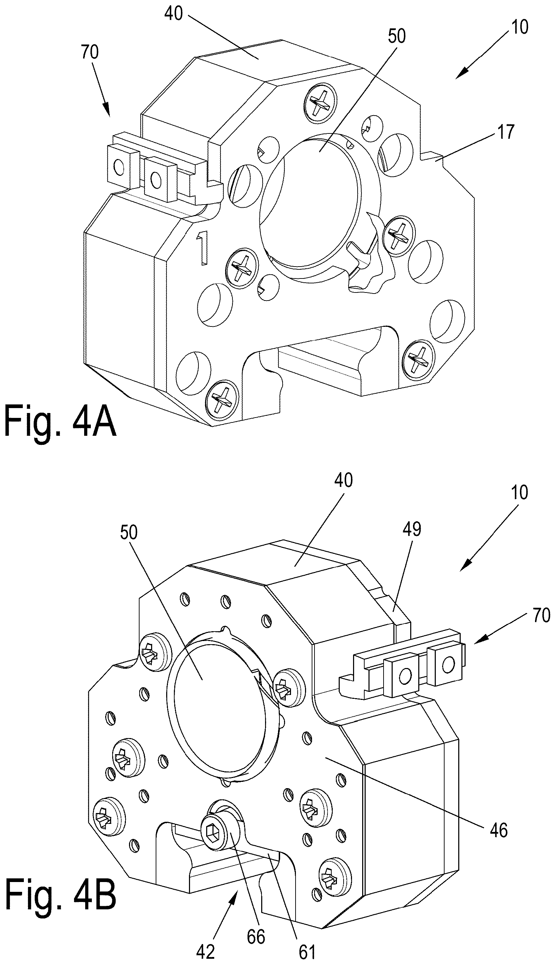

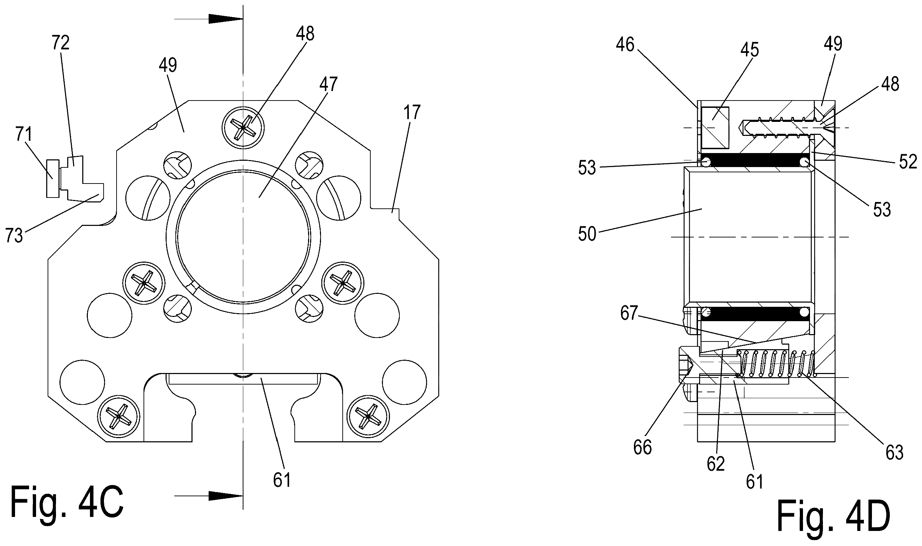

In den Figuren 4A bis 4D ist das Stützelement 10 in einer zusammengebauten Position dargestellt. Der Klemmmechanismus 60 ist oberhalb der Aufnahme 42 zum Aufnehmen des Kopfabschnittes 36 der Schiene 6 angeordnet. Die Schraube 66 steht dabei in Längsrichtung der Schiene 6 über die Platte 46 hervor und kann in Längsrichtung gegen die Kraft der Feder 63 eingedrückt werden. Die Schraube 66 dient dabei auch der Tiefeneinstellung für das Klemmelement 61.

Die Anlaufschräge 62 des Klemmelementes 61 wirkt mit einer Schräge 67 des Stützkörpers 40 zusammen, wobei durch die Kraft der Feder 63 das Klemmelement 61 gegen die Schräge 67 gedrückt wird, so dass durch die Kraft der Feder 63 das Klemmelement 61 nach unten gegen die Schiene 6 gedrückt wird. Dadurch kann das Stützelement 10 klemmend an der Schiene 6 fixiert werden.

Soll das Stützelement 10 nun aus der angeklemmten Position an der Schiene 6 verfahren werden, wird der Klemmmechanismus 60 entriegelt. Hierfür wird die Spindelmutter 5 oder der Schlitten 4 zu dem Stützelement 10 verfahren, wobei eine Anschlagfläche zuerst auf die Schraube 66 auftrifft, bevor ein Kontakt zwischen der Platte 46 und dem Schlitten 4 oder der Spindelmutter 5 erfolgt. Dadurch wird die Schraube 66 gegen die Kraft der Feder 63 eingedrückt und bewegt somit das Klemmelement 61 in Richtung der Platte 49. Dadurch werden die auf die Schiene 6 wirkenden Klemmkräfte aufgehoben, da das Klemmelement 61 nicht mehr durch die Anlaufschräge 62 und die Schräge 67 gegen die Schiene 6 vorgespannt ist.

Die durch die Magnete 45 aufgebrachten Haltekräfte zu der Spindelmutter 5 oder dem Schlitten 4 bzw. zu einem benachbarten Stützelement 11 bis 14 sind dabei größer als die Kraft der Feder 63, so dass ein versehentliches Lösen aus der gekoppelten Position durch die Feder 63 verhindert wird.

Das Stützelement 10 kann nach der Entriegelung des Klemmmechanismus 60 entlang der Schiene 6 leichtgängig verfahren werden, wobei der Stützkörper 40 für eine Führung entlang der Schiene 6 sorgt und der Klemmmechanismus 60 außer Eingriff ist. Wird nun das Stützelement 10 an dem Stopper 16 an dem Profil 3 angehalten und die Spindelmutter 5 mit dem Schlitten 4 bewegt sich weg von dem Stützelement 10, wird die Schraube 66 freigegeben und der Klemmmechanismus 60 wird durch den Druck der Feder 63 aktiviert und klemmt durch die Schräge 67 und die Anlaufschräge 62 das Klemmelement 61 wieder gegen die Schiene 6.

Die anderen Stützelemente 11 bis 14 sind wie das Stützelement 10 aufgebaut, bis auf die Position des Anschlages 17 und die Anzahl der Magneten 45. Im Übrigen wird hinsichtlich der Ausgestaltung der Stützelemente 11 bis 14 und 10' bis 14' auf obige Ausführungen verwiesen.

In den Figuren 3 und 4A bis 4D ist ferner noch ein Stopper 70 gezeigt, der an einer Nut des Profils 3 festlegbar ist. Der Stopper 70 umfasst zwei Nutensteine 71, die in eine entsprechende Nut an den Schenkeln 30 des Profils 3 einfügbar sind. Die Nutensteine 71 sind über Schrauben 74 mit einer Leiste 72 verbunden, die einen hervorstehenden Schenkel 73 umfasst, der als Anschlagsfläche dient. In der Leiste 72 sind Öffnungen 75 zum Durchführen der Schrauben 74 vorgesehen, so dass über die Schrauben 74 die Leiste 72 an der gewünschten Zwischenposition des Profils 3 festgelegt werden kann. Dadurch wird der Stopper 70 an dem Profil 3 festgelegt und definiert eine Anschlagsposition für eines der Stützelemente 10 bis 14 oder 10' bis 14'. Es ist natürlich auch möglich, dass ein Stopper 70 für zwei Stützelemente 10 bis 14 oder 10' bis 14' jeweils einen Anschlag definiert, und zwar für Stützelemente, die sich an gegenüberliegenden Seiten der Spindelmutter 5 befinden. Über die Länge des Profils 3 verteilt sind eine Vielzahl solcher Stopper 70 montiert, die jeweils einen Anschlag für eines der Stützelemente 10 bis 14 oder 10' bis 14' definiert. Dabei dürfen sich die am Profil 3 fixierten Stopper 70 gegenseitig nicht behindern, weshalb eine Anschlagsfläche des Stoppers 70 in Querschnittsansicht an unterschiedlichen Positionen angeordnet wird.

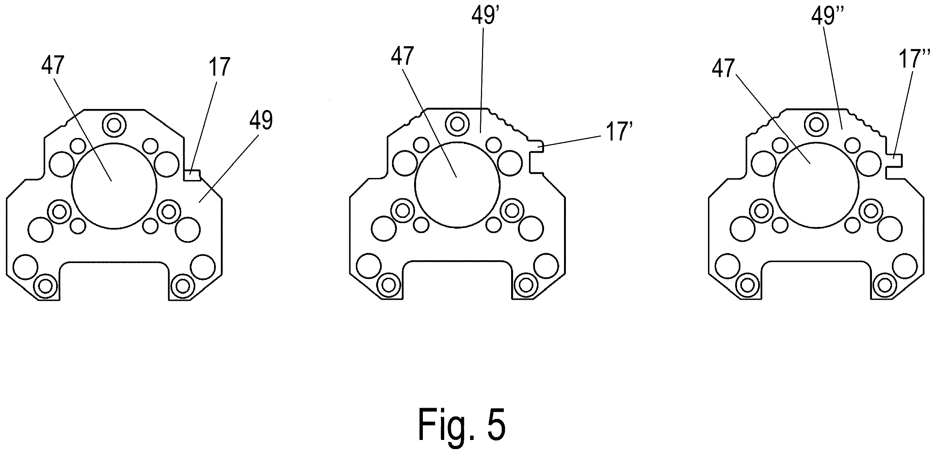

In Figur 5 sind Platten 49, 49' und 49" gezeigt, die an unterschiedlichen Stützelementen 10 bis 14 oder 10' bis 14' fixiert werden. Die Platte 49 des Stützelementes 10 weist den Anschlag 17 auf, während die Platte 49' den Anschlag 17' und die Platte 49" den Anschlag 17" aufweist. Die Platten 49, 49' und 49" können dabei mir der Oberseite oder der Unterseite an einem Stützkörper 40 montiert werden, so dass die Anschläge 17, 17', 17" in einer Querschnittsansicht der Gewindespindel 2 an unterschiedlichen Positionen angeordnet sind, wobei mit den drei Platten 49, 49' und 49" bei beidseitiger Montage sechs Anschlagspositionen definiert werden können.

In dem dargestellten Ausführungsbeispiel ist das Profil 3 im Querschnitt U-förmig ausgebildet. Es ist natürlich möglich, den Linearantrieb 1 auch mit einem Profil 3 mit einem anderen Querschnitt herzustellen. Zudem kann der Querschnitt der Schiene 6 ebenfalls variiert werden, um eine stabile lineare Führung der Spindelmutter 5 und der Stützelemente 10 bis 14 und 10' bis 14' zu ermöglichen. Die Führung der Stützelemente 10 bis 14 und 10' bis 14' sowie der Spindelmutter 5 kann als Gleitführung ausgebildet sein, aber es können auch Wälzkörper vorgesehen werden, um die Führung noch leichtgängiger zu machen.

Die Stützelemente 10 bis 14 und 10' bis 14' können zudem mit Dämpfungsmittel ausgestattet sein, um laute Anschlaggeräusche zu vermeiden. Insbesondere beim schnellen Verfahren des Schlittens 4 können die Stützelemente 10 bis 14 und 10' bis 14' mit höherer Geschwindigkeit aufeinandertreffen, so dass an den Kontaktflächen elastische Elemente, beispielsweise Gummidämpfer oder andere elastische Bauteile vorgesehen werden können, um die Geräusche zu vermindern. Zudem kann zumindest eine der Platten 46 und/oder 49 mit einer elastischen Beschichtung versehen sein.

### Bezugszeichenliste

- 1: Linearantrieb
- 2: Gewindespindel
- 3: Profil
- 4: Schlitten
- 5: Spindelmutter
- 6: Schiene
- 7: Lager
- 8: Zapfen
- 9: Lager
- 10, 10': Stützelement
- 11, 11': Stützelement
- 12, 12': Stützelement
- 13, 13': Stützelement
- 14, 14': Stützelement
- 15: Plattform
- 16: Stopper
- 17: Anschlag
- 18: Anschlag
- 19: Anschlag
- 20: Stopper
- 21: Stopper
- 22: Anschlag
- 23: Anschlag
- 30: Schenkel
- 31: Abschnitt
- 36: Kopfabschnitt
- 37: Mittelabschnitt
- 38: Fußabschnitt
- 40: Stützkörper
- 41: Durchführung
- 42: Aufnahme
- 43: Führungsfläche
- 44: Aussparung
- 45: Magnet
- 46: Platte
- 47: Durchführung
- 48: Schraube
- 49: Platte
- 50: Buchse
- 52: Kragen
- 53: O-Ring
- 60: Klemmmechanismus
- 61: Klemmelement/Mitnehmerelement
- 62: Anlaufschräge
- 63: Feder
- 64: Stirnseite
- 65: Gewindebohrung
- 66: Schraube
- 67: Schräge
- 70: Stopper
- 71: Nutenstein
- 72: Leiste
- 73: Schenkel
- 74: Schraube
- 75: Öffnung

## Patentansprüche

1. Linearantrieb (1), mit einer drehbar angetriebenen Gewindespindel (2), einer drehfest geführten Spindelmutter (5), die durch die Gewindespindel (2) in eine Längsrichtung bewegbar ist, und mindestens einem Stützelement (10-14; 10'-14') zur Abstützung der Gewindespindel (2) gegen eine Bewegung senkrecht zu Längsrichtung, wobei das mindestens eine Stützelement (10-14; 10'-14') eine Durchführung (41) für die Gewindespindel (2) aufweist, wobei an der Durchführung (41) mindestens ein gegen die Gewindespindel (2) vorgespanntes Führungselement (50) vorgesehen ist, das im Wesentlichen hülsenförmig ausgebildet ist, **dadurch gekennzeichnet, dass** das mindestens eine Stützelement (10-14; 10'-14') einen Klemmmechanismus (60) aufweist, mittels dem das Stützelement (10-14; 10'-14') kraftschlüssig festlegbar ist.

2. Linearantrieb nach Anspruch 1, **dadurch gekennzeichnet, dass** das Führungselement als geschlitzte Buchse (50) ausgebildet ist, die radial nach innen gegen die Gewindespindel (2) vorgespannt ist.

3. Linearantrieb nach Anspruch 1 oder 2, **dadurch gekennzeichnet, dass** ein Federelement (53) das Führungselement (50) radial nach innen vorspannt.

4. Linearantrieb nach Anspruch 3, **dadurch gekennzeichnet, dass** das Federelement (53) mindestens einen O-Ring aufweist.

5. Linearantrieb nach Anspruch 4, **dadurch gekennzeichnet, dass** der O-Ring (53) an seiner Außenseite an einer Wand der Durchführung (41) abgestützt ist.

6. Linearantrieb nach einem der vorhergehenden Ansprüche 2 bis 5, **dadurch gekennzeichnet, dass** am äußeren Umfang der Buchse (50) eine elastische Masse vorgesehen ist.

7. Linearantrieb nach einem der vorhergehenden Ansprüche, **dadurch gekennzeichnet, dass** der Klemmmechanismus (60) ein bewegbares Klemmelement (61) umfasst, das durch eine Feder (63) in eine klemmende Position vorgespannt ist.

8. Linearantrieb nach einem der vorhergehenden Ansprüche, **dadurch gekennzeichnet, dass** die Gewindespindel (2) in einem Profil (3) aufgenommen ist, an dem eine Schiene (6) aus Stahl festgelegt ist.

9. Linearantrieb nach Anspruch 8, **dadurch gekennzeichnet, dass** das mindestens eine Stützelement (10-14; 10'-14') an der Schiene (6) geführt ist und über einen Klemmmechanismus (60) an der Schiene (6) festlegbar ist.

10. Linearantrieb nach einem der vorhergehenden Ansprüche, **dadurch gekennzeichnet, dass** jedes Stützelement (10-14; 10'-14') einen Anschlag (17, 18, 19, 22) aufweist, der mit einem an einem Profil (3) vorgesehenen Stopper (16, 20, 21, 70) zusammenwirkt, um das Stützelement (10-14; 10'-14') in einer vorbestimmten Position in Längsrichtung der Gewindespindel (2) an dem Profil oder einer Schiene (6) zu fixieren.

11. Linearantrieb nach einem der vorhergehenden Ansprüche, **dadurch gekennzeichnet, dass** das mindestens eine Stützelement (10-14; 10'-14') einen Stützkörper (40) umfasst, an dem das Führungselement (50) gegen ein Verschieben in Längsrichtung durch ein Halteelement (49) gesichert ist.

12. Linearantrieb nach einem der vorhergehenden Ansprüche, **dadurch gekennzeichnet, dass** das mindestens eine Stützelement (10-14; 10'-14') einen Stützkörper (40) aufweist, an dem eine Platte (49, 49', 49") mit einem integral ausgebildeten Anschlag (17, 17', 17") festgelegt ist.

## Claims

1. Linear drive (1), having a rotatably driven threaded spindle (2), a non-rotatably guided spindle nut (5) which can be moved in a longitudinal direction by the threaded spindle (2), and at least one support element (10-14; 10'-14') for supporting the threaded spindle (2) against a movement perpendicular to the longitudinal direction, wherein the at least one support element (10-14; 10'-14') has a bushing (41) for the threaded spindle (2), wherein at least one guide element (50) which is pretensioned against the threaded spindle (2) is provided on the bushing (41) and is of essentially sleeve-shaped design, **characterized in that** the at least one support element (10-14; 10'-14') has a clamping mechanism (60) by means of which the support element (10-14; 10'-14') can be fixed in a force-locking manner.

2. Linear drive according to claim 1, **characterized in that** the guide element is designed as a slotted bush (50) which is pretensioned radially inwards against the threaded spindle (2).

3. Linear drive according to claim 1 or 2, **characterized in that** a spring element (53) pretensions the guide element (50) radially inwards.

4. Linear drive according to claim 3, **characterized in that** the spring element (53) has at least one O-ring.

5. Linear drive according to claim 4, **characterized in that** the O-ring (53) is supported on its outside on a wall of the bushing (41).

6. Linear drive according to one of the preceding claims 2 to 5, **characterized in that** an elastic mass is provided on the outer circumference of the bush (50).

7. Linear drive according to one of the preceding claims, **characterized in that** the clamping mechanism (60) comprises a movable clamping element (61) which is pretensioned into a clamping position by a spring (63).

8. Linear drive according to one of the preceding claims, **characterized in that** the threaded spindle (2) is housed in a profile (3) to which a rail (6) made of steel is fixed.

9. Linear drive according to claim 8, **characterized in that** the at least one support element (10-14; 10'-14') is guided on the rail (6) and can be fixed to the rail (6) via a clamping mechanism (60).

10. Linear drive according to one of the preceding claims, **characterized in that** each support element (10-14; 10'-14') comprises a stop (17, 18, 19, 22) cooperating with a stopper (16, 20, 21, 70) provided on a profile (3) in order to fix the support element (10-14; 10'-14') in a predetermined position in the longitudinal direction of the threaded spindle (2) on the profile or a rail (6).

11. Linear drive according to one of the preceding claims, **characterized in that** the at least one support element (10-14; 10'-14') comprises a support body (40) on which the guide element (50) is secured against displacement in the longitudinal direction by a retaining element (49).

12. Linear drive according to one of the preceding claims, **characterized in that** the at least one support element (10-14; 10'-14') has a support body (40) to which a plate (49, 49', 49") with an integrally formed stop (17, 17', 17") is fixed.

## Revendications

1. Entraînement linéaire (1) comportant une broche filetée (2) entraînée en rotation, un écrou de broche (5) guidé de manière bloquée en rotation, qui peut être déplacé dans une direction longitudinale par la broche filetée (2), et au moins un élément de support (10-14 ; 10'-14') pour supporter la broche filetée (2) contre un mouvement perpendiculaire à la direction longitudinale, ledit au moins un élément de support (10-14 ; 10'-14') présentant un passage (41) pour la broche filetée (2), au moins un élément de guidage (50) précontraint contre la broche filetée (2), lequel est sensiblement en forme de manchon, étant prévu sur le passage (41), **caractérisé en ce que** ledit au moins un élément de support (10-14 ; 10'-14') présente un mécanisme de serrage (60) au moyen duquel l'élément de support (10-14 ; 10'44') peut être fixé par force.

2. Entraînement linéaire selon la revendication 1, **caractérisé en ce que** l'élément de guidage est réalisé sous la forme d'une douille fendue (50) qui est précontrainte radialement vers l'intérieur contre la broche filetée (2).

3. Entraînement linéaire selon la revendication 1 ou 2, **caractérisé en ce qu'**un élément élastique (53) précontraint radialement vers l'intérieur l'élément de guidage (50).

4. Entraînement linéaire selon la revendication 3, **caractérisé en ce que** l'élément élastique (53) présente au moins un joint torique.

5. Entraînement linéaire selon la revendication 4, **caractérisé en ce que** le joint torique (53) est supporté sur sa face extérieure sur une paroi du passage (41).

6. Entraînement linéaire selon l'une des revendications précédentes 2 à 5, **caractérisé en ce qu'**une masse élastique est prévue sur la périphérie extérieure de la douille (50).

7. Entraînement linéaire selon l'une des revendications précédentes, **caractérisé en ce que** le mécanisme de serrage (60) comprend un élément de serrage mobile (61) qui est précontraint dans une position de serrage par un ressort (63).

8. Entraînement linéaire selon l'une des revendications précédentes, **caractérisé en ce que** la broche filetée (2) est logée dans un profilé (3) auquel est fixé un rail en acier (6).

9. Entraînement linéaire selon la revendication 8, **caractérisé en ce que** ledit au moins un élément de support (10-14 ; 10'-14') est guidé sur le rail (6) et peut être fixé au rail (6) par un mécanisme de serrage (60).

10. Entraînement linéaire selon l'une des revendications précédentes, **caractérisé en ce que** chaque élément de support (10-14 ; 10'-14') présente une butée (17, 18, 19, 22) qui coopère avec un arrêt (16, 20, 21, 70) prévu sur un profilé (3) pour fixer l'élément de support (10-14 ; 10'-14') dans une position prédéterminée dans la direction longitudinale de la broche filetée (2) sur le profilé ou un rail (6).

11. Entraînement linéaire selon l'une des revendications précédentes, **caractérisé en ce que** ledit au moins un élément de support (10-14 ; 10'-14') comprend un corps de support (40) sur lequel l'élément de guidage (50) est bloqué contre un déplacement dans la direction longitudinale par un élément de retenue (49).

12. Entraînement linéaire selon l'une des revendications précédentes, **caractérisé en ce que** ledit au moins un élément de support (10-14 ; 10'-14') présente un corps de support (40) sur lequel est fixée une plaque (49, 49', 49") avec une butée (17, 17', 17") réalisée d'une seule pièce avec elle.
